# EUROPEAN PATENT APPLICATION

(11) **EP 3 174 233 A1**
(43) Date of publication of application: **31.05.2017**
(21) Application number: 15835770.7
(22) Date of filing: 18.03.2015
(51) Int. Cl.: H04L 1/16

(54) **METHOD AND APPARATUS FOR TRANSMITTING DATA IN A WIRELESS LOCAL AREA NETWORK**

(30) Priority: 25.08.2014 CN 201410422580
(71) Applicant: Huawei Technologies Co., Ltd., Longgang District Shenzhen, Guangdong 518129 (CN)
(72) Inventor: SHU, Guiming, Shenzhen Guangdong 518129 (CN); DING, Zhiming, Shenzhen Guangdong 518129 (CN)
(74) Representative: Kreuz, Georg Maria
(86) International application number: PCT/CN2015/074486
(87) International publication number: WO 2016/029683

(57) **Abstract**

Embodiments of the present invention disclose a method and an apparatus for acknowledging transmission of downlink data frames by multiple stations in a wireless local area network. The method includes: sending, by an access point, a corresponding downlink data frame to each station of the multiple stations; and receiving, by the access point after the access point sends the corresponding downlink data frame to each station, acknowledgment messages concurrently sent by the multiple stations on channel resources allocated by the access point to the multiple stations. According to the method and the apparatus provided in the embodiments of the present invention, time required by the multiple stations to feed back the acknowledgment messages can be reduced.

## Description

This application claims priority to Chinese Patent Application No. 201410422580.3, filed with the Chinese Patent Office on August 25, 2014 and entitled "DATA TRANSMISSION METHOD AND APPARATUS USED IN WIRELESS LOCAL AREA NETWORK", which is incorporated herein by reference in its entirety.

### TECHNICAL FIELD

Embodiments of the present invention relate to the field of communications technologies, and in particular, to a data transmission method and apparatus used in a wireless local area network.

### BACKGROUND

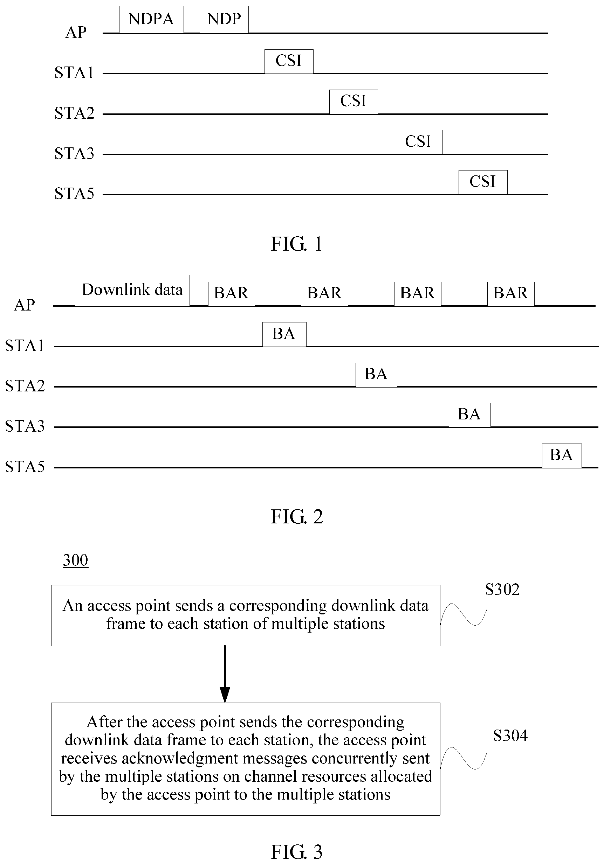

An access point (Access Point, AP for short) can send a downlink data frame to multiple stations (Station, STA for short) at the same time by using the multi-user multiple-input multiple-output (Multi-User Multiple-Input Multiple-Output, MU MIMO for short) or orthogonal frequency division multiple access (Orthogonal Frequency Division Multiple Access, OFDMA for short) technology. Before sending the downlink data frame, the access point may first measure a downlink channel of the station. The access point may measure the downlink channel by using a channel measurement mechanism defined in an Institute of Electrical and Electronics Engineers (Institute of Electrical and Electronics Engineers, IEEE for short) 802.11 standard. As shown in FIG. 1, the access point first sends a null data packet announcement (Null Data Packet Announce, NDPA for short) message to the multiple stations to instruct the stations to perform channel measurement subsequently. Then, the access point sends a null data packet (Null Data Packet, NDP for short) message to the foregoing stations, and the stations measure the downlink channels by using a training sequence in the NDP message and sequentially feed back a channel measurement result, that is, channel state information (Channel State Information, CSI for short), to the access point. The access point can send, according to the CSI fed back by the stations, the downlink data frame to the multiple stations by using the MU MIMO or OFDMA technology.

After sending the downlink data frame to the multiple stations, the access point sequentially sends an acknowledgment request message to the multiple stations at a short interframe space (Short Interframe Space, SIFS for short), so as to request the stations to feed back whether the downlink data frames are received successfully. The acknowledgment request message may be a BlockAckReq (Block Acknowledgement Request, block acknowledgment request; in an IEEE 802.11 standard, BlockAckReq may also be BAR for short). After receiving the acknowledgment request messages, the multiple stations sequentially return acknowledgment messages to the AP in a time division manner. The acknowledgment message may be BlockAck (Block Acknowledgement, block acknowledgment; in an IEEE 802.11 standard, BlockAck may also be BA for short), as shown in FIG. 2. After receiving the acknowledgment requests, the multiple STAs take relatively long feedback time to return the acknowledgment messages to the AP.

### SUMMARY

Embodiments of the present invention provide a method and an apparatus for acknowledging transmission of downlink data frames by multiple stations in a wireless local area network, which can reduce time required by the multiple stations to feed back acknowledgment messages.

A first aspect of an embodiment of the present invention discloses a method for acknowledging transmission of downlink data frames by multiple stations in a wireless local area network, where the method includes: sending, by an access point, a corresponding downlink data frame to each station of the multiple stations; and receiving, by the access point after the access point sends the corresponding downlink data frame to each station, acknowledgment messages concurrently sent by the multiple stations on channel resources allocated by the access point to the multiple stations.

With reference to the first aspect, in a first implementation manner of the first aspect, before the receiving, by the access point after the access point sends the corresponding downlink data frame to each station, acknowledgment messages concurrently sent by the multiple stations, the method further includes: sending, by the access point after preset time, an acknowledgment request message to the multiple stations, where the acknowledgment request message includes channel resource information, and the channel resource information is used to indicate the channel resources allocated by the access point to the multiple stations.

With reference to the first implementation manner of the first aspect, in a second implementation manner of the first aspect, the receiving, by the access point, acknowledgment messages concurrently sent by the multiple stations on channel resources allocated by the access point to the multiple stations is specifically: receiving, by the access point, the acknowledgment messages concurrently sent by the multiple stations on the channel resources indicated by the channel resource information included in the acknowledgment request message.

With reference to the first implementation manner of the first aspect or the second implementation manner of the first aspect, in a third implementation manner of the first aspect, the acknowledgment request message is a block acknowledgment request message BlockAckReq.

With reference to the third implementation manner of the first aspect, in a fourth implementation manner of the first aspect, the BlockAckReq includes sub-channel index information and frame check sequence FCS information, and the sub-channel index information is followed by the FCS information.

With reference to the first aspect, in a fifth implementation manner of the first aspect, the downlink data frame includes information used to identify a channel resource allocated to a station corresponding to the downlink data frame.

With reference to the fifth implementation manner of the first aspect, in a sixth implementation manner of the first aspect, the information is located in a physical frame convergence procedure header PLCP Header of the downlink data frame.

A second aspect of an embodiment of the present invention discloses a method for acknowledging transmission of a downlink data frame by a station in a wireless local area network, where the method includes: receiving, by the station, a downlink data frame sent by an access point; and sending, by the station after the station receives the downlink data frame sent by the access point, an acknowledgment message to the access point on a channel resource allocated by the access point to the station.

With reference to the second aspect, in a first implementation manner of the second aspect, before the sending, by the station after the station receives the downlink data frame sent by the access point, an acknowledgment message to the access point on a channel resource allocated by the access point to the station, the method further includes: receiving, by the station after preset time, an acknowledgment request message sent by the access point, where the acknowledgment request message includes channel resource information, and the channel resource information is used to indicate the channel resource allocated by the access point to the station.

With reference to the first implementation manner of the second aspect, in a second implementation manner of the second aspect, the sending, by the station, an acknowledgment message to the access point on a channel resource allocated by the access point to the station is specifically: sending, by the station, the acknowledgment message to the access point on the channel resource indicated by the channel resource information included in the acknowledgment request message.

With reference to the first implementation manner of the second aspect or the second implementation manner of the second aspect, in a third implementation manner of the second aspect, the acknowledgment request message is a block acknowledgment request message BlockAckReq.

With reference to the third implementation manner of the second aspect, in a fourth implementation manner of the second aspect, the BlockAckReq includes sub-channel index information and frame check sequence FCS information, and the sub-channel index information is followed by the FCS information.

With reference to the second aspect, in a fifth implementation manner of the second aspect, the downlink data frame includes information used to identify the channel resource allocated by the access point to the station.

With reference to the fifth implementation manner of the second aspect, in a sixth implementation manner of the second aspect, the information is located in a physical frame convergence procedure header PLCP Header of the downlink data frame.

A third aspect of an embodiment of the present invention discloses an access point, including: a transceiver, a processor, and a bus, where the transceiver and the processor implement communication by using the bus; the transceiver sends, under control of the processor, a corresponding downlink data frame to each station of multiple stations; and the transceiver is configured to receive, after sending the downlink data frame to each station, acknowledgment messages concurrently sent by the multiple stations on channel resources allocated by the access point to the multiple stations.

With reference to the third aspect, in a first implementation manner of the third aspect, the transceiver is further configured to send an acknowledgment request message to the multiple stations, where the acknowledgment request message includes channel resource information, and the channel resource information is used to indicate the channel resources allocated by the access point to the multiple stations.

With reference to the first implementation manner of the third aspect, in a second implementation manner of the third aspect, the acknowledgment request message is a block acknowledgment request message BlockAckReq.

With reference to the second implementation manner of the third aspect, in a third implementation manner of the third aspect, the BlockAckReq includes sub-channel index information and frame check sequence FCS information, and the sub-channel index information is followed by the FCS information.

With reference to the third aspect, in a fourth implementation manner of the third aspect, the downlink data frame includes information used to identify a channel resource allocated to a station corresponding to the downlink data frame.

With reference to the fourth implementation manner of the third aspect, in a fifth implementation manner of the third aspect, the information is located in a physical frame convergence procedure header PLCP Header of the downlink data frame.

With reference to the third aspect or any implementation manner of the first implementation manner of the third aspect to the fifth implementation manner of the third aspect, in a sixth implementation manner of the third aspect, the access point is one of a laptop computer, a router, a set top box, or a mobile phone.

A fourth aspect of an embodiment of the present invention discloses a station, including: a transceiver, a processor, and a bus, where the transceiver and the processor implement communication by using the bus; the transceiver receives a downlink data frame sent by an access point; and the transceiver is configured to: after receiving the downlink data frame sent by the access point, send, under control of the processor, an acknowledgment message to the access point on a channel resource allocated by the access point to the station.

With reference to the fourth aspect, in a first implementation manner of the fourth aspect, the transceiver is further configured to receive an acknowledgment request message sent by the access point, where the acknowledgment request message includes channel resource information, and the channel resource information is used to indicate the channel resource allocated by the access point to the station.

With reference to the first implementation manner of the fourth aspect, in a second implementation manner of the fourth aspect, the acknowledgment request message is a block acknowledgment request message BlockAckReq.

With reference to the second implementation manner of the fourth aspect, in a third implementation manner of the fourth aspect, the BlockAckReq includes sub-channel index information and frame check sequence FCS information, and the sub-channel index information is followed by the FCS information.

With reference to the fourth aspect, in a fourth implementation manner of the fourth aspect, the downlink data frame includes information used to identify the channel resource allocated by the access point to the station.

With reference to the fourth implementation manner of the fourth aspect, in a fifth implementation manner of the fourth aspect, the information is located in a physical frame convergence procedure header PLCP Header of the downlink data frame.

With reference to the fourth aspect or any implementation manner of the first implementation manner of the fourth aspect to the fifth implementation manner of the fourth aspect, in a sixth implementation manner of the fourth aspect, the access point is one of a laptop computer, a router, a set top box, or a mobile phone.

In the foregoing technical solutions, according to the method and the apparatus for acknowledging transmission of downlink data frames by multiple stations in a wireless local area network provided in the embodiments of the present invention, an access point sends a corresponding downlink data frame to each station of the multiple stations; and after the access point sends the corresponding downlink data frame to each station, the access point receives acknowledgment messages concurrently sent by the multiple stations on channel resources allocated by the access point to the multiple stations, which can reduce time required by the multiple stations to feed back the acknowledgment messages.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic diagram of a channel measurement mechanism defined in an IEEE 802.11 standard;
FIG. 2 is a schematic diagram of feeding back an acknowledgment message to an access point AP by multiple stations STAs;
FIG. 3 is a schematic diagram of a method for acknowledging transmission of downlink data frames by multiple stations in a wireless local area network according to an embodiment of the present invention;
FIG. 4 is another schematic diagram of acknowledging transmission of downlink data frames by multiple stations in a wireless local area network according to an embodiment of the present invention;
FIG. 5 is a schematic diagram of a frame format of BlockAckReq according to an embodiment of the present invention;
FIG. 6 is still another schematic diagram of acknowledging transmission of downlink data frames by multiple stations in a wireless local area network according to an embodiment of the present invention;
FIG. 7a is a schematic diagram of a physical-layer frame format of a downlink data frame according to an embodiment of the present invention;
FIG. 7b is still another schematic diagram of a physical-layer frame format of a downlink data frame according to an embodiment of the present invention;
FIG. 8 is a schematic diagram of a method for acknowledging transmission of a downlink data frame by a station in a wireless local area network according to an embodiment of the present invention;
FIG. 9 is a schematic diagram of an access point according to an embodiment of the present invention; and
FIG. 10 is a schematic diagram of a station according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

An access point (Access Point, AP for short) in the embodiments may be a router, a mobile phone, a laptop computer, a set top box, or any other appropriate device configured to perform communication by using a wireless medium or a wired medium; a station (Station, STA for short) may be a router, a mobile phone, a laptop computer, a set top box, or any other appropriate device configured to perform communication by using a wireless medium or a wired medium.

Referring to FIG. 3, an embodiment of the present invention provides a method 300 for acknowledging transmission of downlink data frames by multiple stations in a wireless local area network. A device used to perform the method 300 may be an access point. The method 300 includes the following steps:

S302: The access point sends a corresponding downlink data frame to each station of the multiple stations.

The access point may concurrently send the downlink data frame to each station of the multiple stations by using the multi-user multiple-input multiple-output (Multi-User Multiple-Input Multiple-Output, MU MIMO for short) or orthogonal frequency division multiple access (Orthogonal Frequency Division Multiple Access, OFDMA for short) technology. Alternatively, the access point may sequentially send the corresponding downlink data frame to each station of the multiple stations.

The "multiple" may be understood as "two or more". For example, the "multiple stations" may include two stations or more stations.

S304: After the access point sends the corresponding downlink data frame to each station, the access point receives acknowledgment messages concurrently sent by the multiple stations on channel resources allocated by the access point to the multiple stations.

That the access point allocates a channel resource to each station of the multiple stations may be implemented in different manners. The access point may add channel resource information to an acknowledgment request message sent to the multiple stations, where the channel resource information is used to indicate the channel resource allocated by the access point to each station of the multiple stations; or the access point may add channel resource information to the corresponding downlink data frame sent to each station of the multiple stations, where the channel resource information is used to indicate a channel resource allocated by the access point to a station receiving the corresponding downlink data frame. The multiple stations may use the OFDMA technology to concurrently send the acknowledgment messages to the access point by using the channel resources allocated by the access point and indicated by the channel resource information, so as to notify the access point of whether the downlink data frames are received successfully.

According to the method provided in this embodiment of the present invention, an access point sends a corresponding downlink data frame to each station of the multiple stations; and after the access point sends the corresponding downlink data frame to each station, the access point receives acknowledgment messages concurrently sent by the multiple stations on channel resources allocated by the access point to the multiple stations, which can reduce time taken by the multiple stations to feed back the acknowledgment messages. In addition, the manner of concurrently sending the acknowledgment messages by the multiple stations to the access point on the channel resources allocated by the access point to the multiple stations also improves channel utilization.

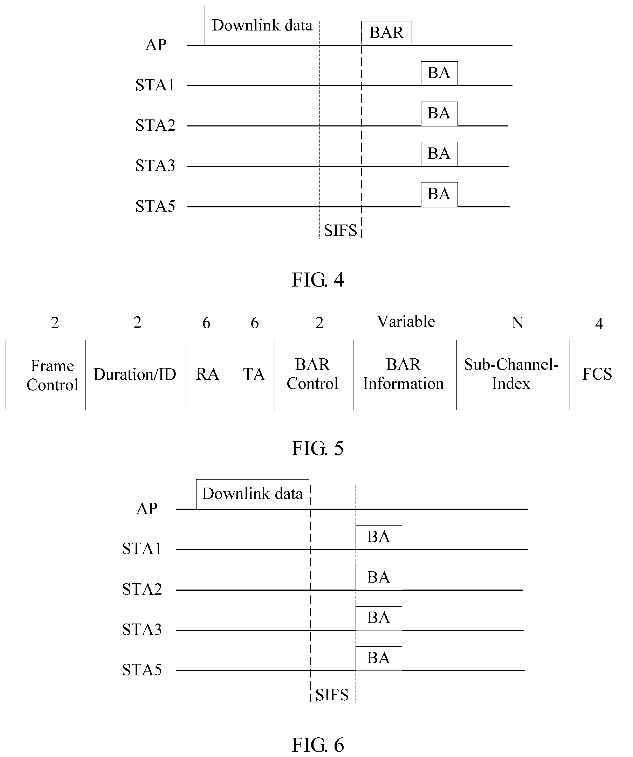

FIG. 4 shows a schematic diagram of acknowledging transmission of downlink data frames by multiple stations in a wireless local area network according to an embodiment of the present invention. Before the access point receives, after the access point sends a downlink data frame to the multiple stations, acknowledgment messages concurrently sent by the multiple stations, the method further includes:
sending, by the access point, an acknowledgment request message to the multiple stations after preset time, where the acknowledgment request message includes channel resource information, and the channel resource information is used to indicate the channel resources allocated by the access point to the multiple stations.

The preset time may be a short interframe space (Short Interframe Space, SIFS for short). Values of the SIFS may be different in different IEEE 802.11 standards. For example, in the IEEE 802.11a standard, the value of the SIFS is 16 µs, and in the IEEE 802.11g standard, the value of the SIFS is 10 µs.

The access point may send the acknowledgment request message to the multiple stations by means of multicast (multicast), or may send the acknowledgment request message to a corresponding station by means of unicast (unicast). When the access point sends the acknowledgment request message to the multiple stations by means of multicast, the channel resource information included in the acknowledgment request message indicates the channel resources allocated by the access point to the multiple stations. When the access point sequentially sends the acknowledgment request message to a corresponding station of the multiple stations by means of unicast, the channel resource information included in the acknowledgment request message indicates a channel resource allocated by the access point to the corresponding station.

Specifically, the acknowledgment request message may be a block acknowledgment request message BlockAckReq. When the access point sends the acknowledgment request message to the multiple stations by means of multicast, the block acknowledgment request message BlockAckReq includes channel resource information that indicates the channel resources allocated by the access point to the multiple stations. When the access point sequentially sends the acknowledgment request message to a corresponding station of the multiple stations by means of unicast, the acknowledgment request message includes channel resource information that indicates a channel resource allocated by the access point to the corresponding station. After the access point sends the downlink data frame to each station of the multiple stations, the access point receives the acknowledgment messages concurrently sent by the multiple stations to the access point by using the channel resources indicated by the channel resource information included in the block acknowledgment request message BlockAckReq.

As shown in FIG. 5, FIG. 5 is a schematic diagram of a frame format of BlockAckReq according to an embodiment of the present invention. The frame format of BlockAckReq includes a 2-byte frame control Frame Control field (Field; in a communications standard, Field may be translated as a field or may be translated as a domain; the frame control Frame Control field may also be referred to as frame control Frame Control information), a 2-byte frame duration Duration/ID field, a 6-byte receiver address RA field, a 6-byte transmitter address TA field, a 2-byte BAR Control field, a variable-byte BAR Information field, an N-byte Sub-Channel-Index (sub-channel index) field (the Sub-Channel-Index field may also be referred to as Sub-Channel-Index information), and a 4-byte FCS (Frame Check Sequence, frame check sequence) field, where N is a positive integer.

The N-byte sub-channel index field is a field added to the frame format of BlockAckReq in this embodiment of the present invention. N may be set to a quantity of bytes according to an actual need. For example, N may be set to a quantity of bytes according to a quantity of stations. The sub-channel index field is used to indicate a channel resource allocated by an access point to a station. Specifically, the sub-channel index field may carry channel resource information used to indicate a channel resource allocated by an access point to a station. For example, the access point may send BlockAckReq to a corresponding station by means of unicast, where N may be 2 bytes, a total of 16 binary bits. The 2-byte sub-channel index field divides channel resources of 0 MHz to 40 MHz into 16 sub-channels, where each sub-channel has a width of 2.5 MHz. The 16 sub-channels are numbered 1 to 16 sequentially from a low frequency to a high frequency. If the access point allocates the tenth sub-channel to a corresponding station, the tenth bit of the 16 binary bits may be set to 1, and remaining binary bits are set to 0, which indicates that the tenth sub-channel is allocated to the corresponding station, and the station feeds back an acknowledgment message by using the tenth sub-channel. By analog, the access point may allocate channel resources to all stations receiving downlink data frames, so that the multiple stations concurrently return acknowledgment messages to the access point by using the allocated channel resources, where the acknowledgment messages may be BlockAck. Similarly, the access point may send BlockAckReq to multiple stations by means of multicast. If the access point allocates a channel resource to m stations at the same time, N needs to include at least 2m bytes, so as to indicate the channel resource allocated by the access point to the m stations, where m is a positive integer greater than 1.

Specifically, the sub-channel index Sub-Channel-Index field added to the frame format of BlockAckReq may be followed by the FCS field. For example, the sub-channel index field may be located in a location followed by the FCS field and following the BAR Information field in the frame format of BlockAckReq. It may be understood that the sub-channel index field may also be located in a location followed by the BAR Information field and following the BAR Control field in the frame format of BlockAckReq. This embodiment of the present invention does not impose a limitation thereto.

Optionally, the sub-channel index field may also be used to indicate an index number. A station may find, from a server or from a local data table of the station according to the index number, a channel resource allocated to the station. The sub-channel index field is channel resource information included in an acknowledgment request message, where the channel resource information is used to indicate an index number, so that a station may find, from a server or from a local data table of the station according to the index number, a channel resource allocated to the station. For example, channel resources of 0 MHz to 40 MHz are divided into 16 sub-channels, where each sub-channel has a width of 2.5 MHz. The 16 sub-channels are numbered 1 to 16 sequentially from a low frequency to a high frequency. The access point sends BlockAckReq to a corresponding station by means of unicast, where N may be 1 byte, that is, 8 binary bits. The first bit to the fourth bit of the 8 binary bits indicate a start sub-channel number of the channel resource allocated by the access point to the corresponding station, and the fifth bit to the eighth bit indicate an end sub-channel number of the channel resource allocated by the access point to the corresponding station. For example, the 1-byte sub-channel index field is 01100010. The corresponding station finds, from the data table according to the indicated index number, that the first bit to the fourth bit 0010 indicates that the start sub-channel number of the channel resource allocated by the access point to the corresponding station is 2, and the fifth bit to the eighth bit 0110 indicates that the end sub-channel number of the channel resource allocated by the access point to the corresponding station is 6. Therefore, the 1-byte sub-channel index field 01100010 indicates that channel resources corresponding to the second sub-channel to the sixth sub-channel are allocated to the station. By analog, the access point may allocate channel resources to all stations receiving downlink data frames, so that the multiple stations concurrently return acknowledgment messages to the access point by using the allocated channel resources, where the acknowledgment messages may be BlockAck. Similarly, the access point sends BlockAckReq to multiple stations by means of multicast. If the access point allocates a channel resource to m stations at the same time, N needs to include at least m bytes, so as to indicate the channel resource allocated by the access point to the m stations, where m is a positive integer greater than 1.

According to the method provided in this embodiment of the present invention, an access point sends a corresponding downlink data frame to each station of the multiple stations; and after the access point sends the corresponding downlink data frame to each station, the access point receives acknowledgment messages concurrently sent by the multiple stations on channel resources allocated by the access point to the multiple stations, which can reduce time taken by the multiple stations to feed back the acknowledgment messages. In addition, the manner of concurrently sending the acknowledgment messages by the multiple stations to the access point on the channel resources allocated by the access point to the multiple stations also improves channel utilization.

FIG. 6 is still another schematic diagram of acknowledging transmission of downlink data frames by multiple stations in a wireless local area network according to an embodiment of the present invention. An access point sends a corresponding downlink data frame to each station of the multiple stations; and information used to identify a channel resource allocated to a station corresponding to the downlink data frame is added to the corresponding downlink data frame. After receiving the corresponding downlink data frame, the station parses out the channel resource indicated by the channel resource information included in the corresponding downlink data frame. In this manner, the access point can allocate a channel resource to each station of the multiple stations, and the multiple stations can concurrently send acknowledgment messages to the access point by using the channel resources allocated by the access point to the multiple stations, so as to notify the access point of whether downlink data frames are received successfully, where the acknowledgment messages may be BlcokAck. Specifically, the information used to identify a channel resource allocated to a station corresponding to a downlink data frame is a sub-channel index (Sub-Channel-Index) field (Field).

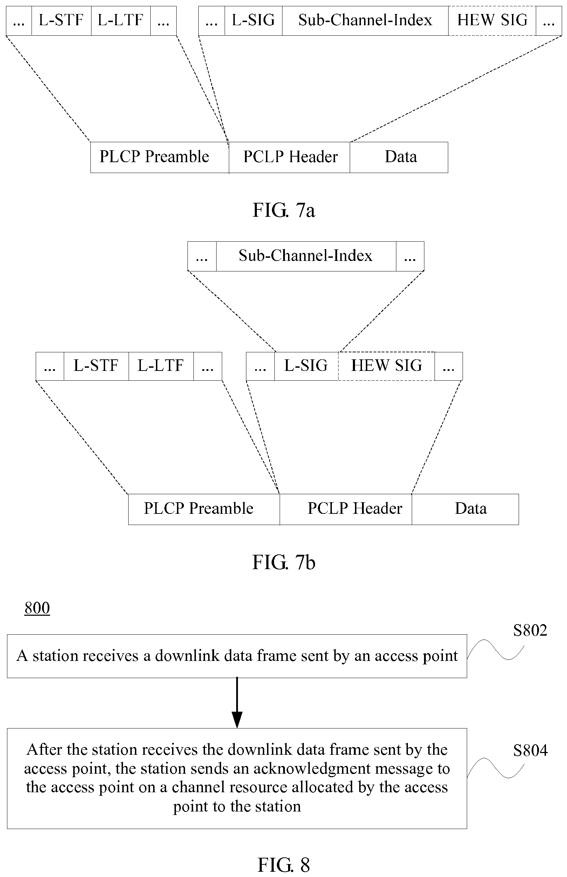

Optionally, FIG. 7a is a schematic diagram of a physical-layer frame format of a downlink data frame according to an embodiment of the present invention. The sub-channel index field may be located in a PLCP Header (Physical Layer Convergence Procedure Header, physical layer convergence procedure header) of the downlink data frame. The physical-layer frame format of the downlink data frame includes a PLCP Preamble (PLCP preamble) field, a PLCP Header field, and a Data (data) field. The PLCP Preamble includes an L-STF (Legacy Short Training Field, legacy short training field) and an L-LTF (Legacy Long Training Field, legacy long training field). The PLCP Header field includes an L-SIG (Legacy Signal, legacy signal) field. In the next-generation WLAN (Wireless Local Area Network, wireless local area network) technology standard IEEE 802.11 ax following the IEEE 802.11 ac standard, the PLCP Header may further include an HEW SIG (High Efficiency WLAN Signal, high efficiency WLAN signal) field. The added sub-channel index field may be located in the PLCP Header field. For example, the sub-channel index field may be at a location following the L-SIG field and followed by the HEW SIG field. Alternatively, the sub-channel index field may be at a location followed by the L-SIG field. This embodiment of the present invention does not impose a limitation thereto.

Optionally, FIG. 7b shows still another schematic diagram of a physical-layer frame format of a downlink data frame according to an embodiment of the present invention. The sub-channel index field may be located in an L-SIG field of a PLCP Header, and specifically, the sub-channel index field is added to the L-SIG field. Alternatively, the sub-channel index field may be located in an HEW SIG field of a PLCP header, and specifically, the sub-channel index field is added to the HEW SIG field.

It may be understood that FIG. 7a and FIG. 7b are schematic diagrams of physical-layer frame formats of downlink data frames, the HEW SIG field may be at a location following the L-SIG field, or the HEW SIG field may be at a location followed by the L-SIG field. This embodiment of the present invention does not impose a limitation thereto. It should be noted that information used to identify a channel resource that is used to send an acknowledgment message and that is allocated by an access point to a station corresponding to a downlink data frame may be carried in a header of a physical-layer frame format of the downlink data frame, or may be carried in a header of a Media Access Control (Media Access Control, MAC for short)-layer frame format of the downlink data frame, and in this case, a specific manner of carrying the information is similar to a manner of placing the information in the header of the physical-layer frame format of the downlink data frame.

Specifically, a quantity of bytes of the sub-channel index field is N. N may be set to a quantity of bytes according to an actual need. For example, N may be set to a quantity of bytes according to a quantity of stations. The sub-channel index field is used to indicate a channel resource allocated by an access point to a station. Optionally, the sub-channel index field may carry channel resource information that indicates a channel resource allocated by an access point to a corresponding station. For example, N may be 1 byte, that is, 8 binary bits. The 1-byte sub-channel index field divides channel resources of 0 MHz to 20 MHz into eight sub-channels, where each sub-channel has a width of 2.5 MHz. The eight sub-channels are numbered 1 to 8 sequentially from a low frequency to a high frequency. If the access point allocates the fifth sub-channel to a station corresponding to a downlink data frame, the fifth bit of the 8 binary bits may be set to 1, and remaining binary bits are set to 0, which indicates that the fifth sub-channel is allocated to the station corresponding to the downlink data frame, and the station feeds back an acknowledgment message by using the fifth sub-channel. By analog, the access point may allocate channel resources to all stations receiving corresponding downlink data frames, so that all the stations receiving the corresponding downlink data frames concurrently return acknowledgment messages to the access point by using the allocated channel resources, where the acknowledgment messages may be BlockAck.

Optionally, the sub-channel index field may also be used to indicate an index number. A station may find, from a server or from a local data table of the station according to the index number, a channel resource allocated to the station. The sub-channel index field is channel resource information included in a downlink data frame, where the channel resource information is used to indicate an index number, so that a station may find, from a server or from a local data table of the station according to the index number, a channel resource allocated to the station. For example, channel resources of 0 MHz to 40 MHz are divided into 16 sub-channels, where each sub-channel has a width of 2.5 MHz. The 16 sub-channels are numbered 1 to 16 sequentially from a low frequency to a high frequency. N may be 1 byte, that is, 8 binary bits. The first bit to the fourth bit of the 8 binary bits indicate a start sub-channel number of the channel resource allocated by the access point to the corresponding station, and the fifth bit to the eighth bit indicate an end sub-channel number of the channel resource allocated by the access point to the corresponding station. For example, the 1-byte sub-channel index field is 01100010. The corresponding station finds, from the data table according to the indicated index number, that the first bit to the fourth bit 0010 indicates that the start sub-channel number of the channel resource allocated by the access point to the corresponding station is 2, and the fifth bit to the eighth bit 0110 indicates that the end sub-channel number of the channel resource allocated by the access point to the corresponding station is 6. Therefore, the 1-byte sub-channel index field 01100010 indicates that channel resources corresponding to the second sub-channel to the sixth sub-channel are allocated to the station. By analog, the access point may allocate channel resources to all stations receiving downlink data frames, so that the stations receiving the downlink data frames concurrently return acknowledgment messages to the access point by using the allocated channel resources, where the acknowledgment messages may be BlockAck.

According to the method provided in this embodiment of the present invention, an access point sends a corresponding downlink data frame to each station of the multiple stations; and after the access point sends the corresponding downlink data frame to each station, the access point receives acknowledgment messages concurrently sent by the multiple stations on channel resources allocated by the access point to the multiple stations, which can reduce time taken by the multiple stations to feed back the acknowledgment messages. In addition, the manner of concurrently sending the acknowledgment messages by the multiple stations to the access point on the channel resources allocated by the access point to the multiple stations also improves channel utilization.

It should be understood that, for example, in the IEEE 802.11n, an operating frequency band range in the IEEE 802.11n includes 2.4 GHz to 2.4835 GHz and 5.150 GHz to 5.850 GHz. The channel resources of 0 MHz to 20 MHz or channel resources of 0 MHz to 40 MHz refer to channel resources with a frequency bandwidth of 20 MHz or 40 MHz starting from 2.4 GHz or starting from 5.150 GHz.

The above describes, from a perspective of an access point, a method for acknowledging transmission of downlink data frames by multiple stations in a wireless local area network according to an embodiment of the present invention. The following describes a method according to an embodiment of the present invention from a perspective of a station.

FIG. 8 shows a schematic diagram of a method for acknowledging transmission of a downlink data frame by a station in a wireless local area network according to an embodiment of the present invention. The method 800 may be performed by a station. The method 800 includes the following steps:
S802: The station receives a downlink data frame sent by an access point.
S804: After the station receives the downlink data frame sent by the access point, the station sends an acknowledgment message to the access point on a channel resource allocated by the access point to the station.

That the access point allocates the channel resource to the station may be implemented in different manners. The access point may add channel resource information to an acknowledgment request message sent to the station, where the channel resource information is used to indicate the channel resource allocated by the access point to the station; or the access point may add channel resource information to the downlink data frame sent to the station, where the channel resource information is used to indicate the channel resource allocated by the access point to the station. The station sends the acknowledgment message to the access point by using the channel resource allocated by the access point and indicated by the channel resource information, so as to notify the access point of whether the downlink data frame is received successfully.

According to the method provided in this embodiment of the present invention, a station receives a downlink data frame sent by an access point; and after the station receives the downlink data frame sent by the access point, the station sends an acknowledgment message to the access point on a channel resource allocated by the access point to the station. In this manner, an access point allocates a channel resource to a station, rather than the access point and the station contend for use of a channel resource, which can improve channel utilization. In addition, when there are multiple stations, the multiple stations concurrently send acknowledgment messages to the access point on channel resources allocated by the access point to the multiple stations, and this manner can reduce time required for feeding back the acknowledgment messages.

FIG. 4 shows a schematic diagram of acknowledging transmission of downlink data frames by multiple stations in a wireless local area network according to an embodiment of the present invention. Before the multiple stations concurrently send, after the multiple stations receive downlink data frames send by the access point, acknowledgment messages to the access point on channel resources allocated by the access point to the multiple stations, the method further includes:
receiving, by the station after preset time, an acknowledgment request message sent by the access point, where the acknowledgment request message includes channel resource information, and the channel resource information is used to indicate the channel resource allocated by the access point to the station.

The preset time may be an SIFS. Values of the SIFS may be different in different IEEE 802.11 standards. For example, in the IEEE 802.11a standard, the value of the SIFS is 16 µs, and in the IEEE 802.11g standard, the value of the SIFS is 10 µs.

Specifically, the acknowledgment request message may be a block acknowledgment request message BlockAckReq, and the block acknowledgment request message BlockAckReq includes the channel resource information that indicates the channel resources allocated by the access point to the multiple stations. After the access point sends the downlink data frame to each station of the multiple stations, the access point receives the acknowledgment messages concurrently sent by the multiple stations, where the multiple stations concurrently send the acknowledgment messages to the access point by using the channel resources indicated by the channel resource information included in the block acknowledgment request message BlockAckReq.

FIG. 5 shows a schematic diagram of a frame format of BlockAckReq according to an embodiment of the present invention. For a specific implementation manner, refer to the description of BlockAckReq from a perspective of an access point in the foregoing embodiment of the method for acknowledging transmission of downlink data frames by multiple stations in a wireless local area network.

FIG. 6 is still another schematic diagram of acknowledging transmission of downlink data frames by multiple stations in a wireless local area network according to an embodiment of the present invention. An access point sends a corresponding downlink data frame to each station of the multiple stations; and information used to identify a channel resource allocated to a station corresponding to the downlink data frame is added to the corresponding downlink data frame. After receiving the corresponding downlink data frame, the station parses out the channel resource indicated by the channel resource information included in the corresponding downlink data frame. In this manner, the access point can allocate a channel resource to each station of the multiple stations, and the multiple stations can concurrently send acknowledgment messages to the access point by using the channel resources allocated by the access point to the multiple stations, so as to notify the access point of whether downlink data frames are received successfully, where the acknowledgment messages may be BlcokAck. Specifically, the information used to identify a channel resource allocated to a station corresponding to a downlink data frame is a sub-channel index (Sub-Channel-Index) field.

FIG. 7a is a schematic diagram of a physical-layer frame format of a downlink data frame according to an embodiment of the present invention, and FIG. 7b is still another schematic diagram of a physical-layer frame format of a downlink data frame according to an embodiment of the present invention. For a specific implementation manner, refer to the description of a physical-layer frame format of a downlink data frame from a perspective of an access point in the foregoing embodiment of the method for acknowledging transmission of downlink data frames by multiple stations in a wireless local area network.

According to the method provided in this embodiment of the present invention, a station receives a downlink data frame sent by an access point; and after the station receives the downlink data frame sent by the access point, the station sends an acknowledgment message to the access point on a channel resource allocated by the access point to the station. In this manner, an access point allocates a channel resource to a station, rather than the access point and the station contend for use of a channel resource, which can improve channel utilization. In addition, when there are multiple stations, the multiple stations concurrently send acknowledgment messages to the access point on channel resources allocated by the access point to the multiple stations, and this manner can reduce time required for feeding back the acknowledgment.

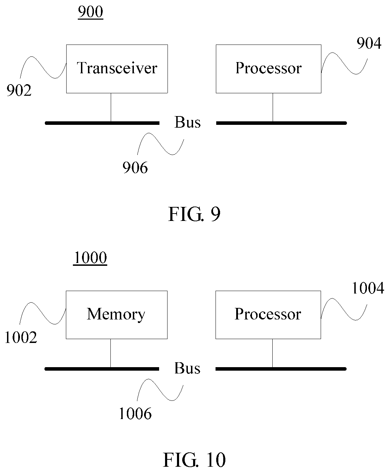

FIG. 9 shows a schematic diagram of an access point 900 according to an embodiment of the present invention. The access point 900 includes:
a transceiver 902, a processor 904, and a bus 906, where
the transceiver 902 and the processor 904 implement communication by using the bus 906;
the transceiver 902 sends, under control of the processor 904, a corresponding downlink data frame to each station of multiple stations; and
the transceiver 902 is configured to receive, after sending the downlink data frame to the multiple stations, acknowledgment messages concurrently sent by the multiple stations on channel resources allocated by the access point to the multiple stations.

That the access point allocates a channel resource to each station of the multiple stations may be implemented in different manners. The access point may add channel resource information to an acknowledgment request message sent to the multiple stations, where the channel resource information is used to indicate the channel resource allocated by the access point to each station of the multiple stations; or the access point may add channel resource information to the corresponding downlink data frame sent to each station of the multiple stations, where the channel resource information is used to indicate a channel resource allocated by the access point to a station receiving the corresponding downlink data frame. The multiple stations may use the OFDMA technology to concurrently send the acknowledgment messages to the access point by using the channel resources allocated by the access point and indicated by the channel resource information, so as to notify the access point of whether the downlink data frames are received successfully. The access point may be one of a laptop computer, a router, a set top box, or a mobile phone.

The access point provided in this embodiment of the present invention includes a transceiver 902, a processor 904, and a bus 906; the transceiver 902 and the processor 904 implement communication by using the bus 906; the transceiver 902 sends, under control of the processor 904, a corresponding downlink data frame to each station of multiple stations; and the transceiver 902 is configured to receive, after sending the downlink data frame to the multiple stations, acknowledgment messages concurrently sent by the multiple stations on channel resources allocated by the access point to the multiple stations, which can reduce time taken by the multiple stations to feed back the acknowledgment messages. In addition, the manner of concurrently sending the acknowledgment messages by the multiple stations to the access point on the channel resources allocated by the access point to the multiple stations also improves channel utilization.

FIG. 4 shows a schematic diagram of acknowledging transmission of downlink data frames by multiple stations in a wireless local area network according to an embodiment of the present invention. The transceiver 902 is configured to send an acknowledgment request message to the multiple stations, where the acknowledgment request message includes channel resource information, and the channel resource information is used to indicate the channel resources allocated by the access point to the multiple stations.

After sending the downlink data frame to the multiple stations, the transceiver 902 may send the acknowledgment request message to the multiple stations after preset time. The preset time may be an SIFS. Values of the SIFS may be different in different IEEE 802.11 standards. For example, in the IEEE 802.11a standard, the value of the SIFS is 16 µs, and in the IEEE 802.11g standard, the value of the SIFS is 10 µs.

Specifically, the acknowledgment request message may be a block acknowledgment request message BlockAckReq, and the block acknowledgment request message BlockAckReq includes the channel resource information that indicates the channel resources allocated by the access point to the multiple stations. After the access point sends the downlink data frame to each station of the multiple stations, the access point receives the acknowledgment messages concurrently sent by the multiple stations, where the multiple stations concurrently send the acknowledgment messages to the access point by using the channel resources indicated by the channel resource information included in the block acknowledgment request message BlockAckReq.

FIG. 5 shows a schematic diagram of a frame format of BlockAckReq according to an embodiment of the present invention. For a specific implementation manner, refer to the description of BlockAckReq from a perspective of an access point in the foregoing embodiment of the method for acknowledging transmission of downlink data frames by multiple stations in a wireless local area network.

FIG. 6 is still another schematic diagram of acknowledging transmission of downlink data frames by multiple stations in a wireless local area network according to an embodiment of the present invention. An access point sends a corresponding downlink data frame to each station of the multiple stations; and information used to identify a channel resource allocated to a station corresponding to the downlink data frame is added to the corresponding downlink data frame. After receiving the corresponding downlink data frame, the station parses out the channel resource indicated by the channel resource information included in the corresponding downlink data frame. In this manner, the access point can allocate a channel resource to each station of the multiple stations, and the multiple stations can concurrently send acknowledgment messages to the access point by using the channel resources allocated by the access point to the multiple stations, so as to notify the access point of whether downlink data frames are received successfully, where the acknowledgment messages may be BlcokAck. Specifically, the information used to identify a channel resource allocated to a station corresponding to a downlink data frame is a sub-channel index (Sub-Channel-Index) field.

FIG. 7a is a schematic diagram of a physical-layer frame format of a downlink data frame according to an embodiment of the present invention, and FIG. 7b is still another schematic diagram of a physical-layer frame format of a downlink data frame according to an embodiment of the present invention. For a specific implementation manner, refer to the description of a physical-layer frame format of a downlink data frame from a perspective of an access point in the foregoing embodiment of the method for acknowledging transmission of downlink data frames by multiple stations in a wireless local area network.

FIG. 10 shows a schematic diagram of a station 1000 according to an embodiment of the present invention. The station 1000 includes:
a transceiver 1002, a processor 1004, and a bus 1006, where
the transceiver 1002 and the processor 1004 implement communication by using the bus 1006;
the transceiver 1002 receives a downlink data frame sent by an access point; and
the transceiver 1002 is configured to send, under control of the processor 1004 after receiving the downlink data frame sent by the access point, an acknowledgment message to the access point on a channel resource allocated by the access point to the station.

That the access point allocates the channel resource to the station may be implemented in different manners. The access point may add channel resource information to an acknowledgment request message sent to the station, where the channel resource information is used to indicate the channel resource allocated by the access point to the station; or the access point may add channel resource information to the downlink data frame sent to the station, where the channel resource information is used to indicate the channel resource allocated by the access point to the station. The station sends the acknowledgment message to the access point by using the channel resource allocated by the access point and indicated by the channel resource information, so as to notify the access point of whether the downlink data frame is received successfully. The station may be one of a laptop computer, a router, a set top box, or a mobile phone.

The station provided in this embodiment of the present invention includes a transceiver 1002, a processor 1004, and a bus 1006; the transceiver 1002 and the processor 1004 implement communication by using the bus 1006; the transceiver 1002 receives a downlink data frame sent by an access point; and the transceiver 1002 is configured to send, under control of the processor 1004 after receiving the downlink data frame sent by the access point, an acknowledgment message to the access point on a channel resource allocated by the access point to the station. In this manner, an access point allocates a channel resource to a station, rather than the access point and the station contend for use of a channel resource, which can improve channel utilization. In addition, when there are multiple stations, the multiple stations concurrently send acknowledgment messages to the access point on channel resources allocated by the access point to the multiple stations, and this manner can reduce time required for feeding back the acknowledgment.

FIG. 4 shows a schematic diagram of acknowledging transmission of downlink data frames by multiple stations in a wireless local area network according to an embodiment of the present invention. The transceiver 1002 is configured to receive an acknowledgment request message sent by the access point, where the acknowledgment request message includes channel resource information, and the channel resource information is used to indicate channel resources allocated by the access point to the multiple stations.

After receiving data sent by the access point, the transceiver 1002 may receive, after preset time, the acknowledgment request message sent by the access point. The preset time may be an SIFS. Values of the SIFS may be different in different IEEE 802.11 standards. For example, in the IEEE 802.11a standard, the value of the SIFS is 16 µs, and in the IEEE 802.11g standard, the value of the SIFS is 10 µs.

Specifically, the acknowledgment request message may be a block acknowledgment request message BlockAckReq, and the block acknowledgment request message BlockAckReq includes the channel resource information that indicates the channel resources allocated by the access point to the multiple stations. After the access point sends the downlink data frame to each station of the multiple stations, the access point receives the acknowledgment messages concurrently sent by the multiple stations, where the multiple stations concurrently send the acknowledgment messages to the access point by using the channel resources indicated by the channel resource information included in the block acknowledgment request message BlockAckReq.

FIG. 5 shows a schematic diagram of a frame format of BlockAckReq according to an embodiment of the present invention. For a specific implementation manner, refer to the description of BlockAckReq from a perspective of an access point in the foregoing embodiment of the method for acknowledging transmission of downlink data frames by multiple stations in a wireless local area network.

FIG. 6 is still another schematic diagram of acknowledging transmission of downlink data frames by multiple stations in a wireless local area network according to an embodiment of the present invention. An access point sends a corresponding downlink data frame to each station of the multiple stations; and information used to identify a channel resource allocated to a station corresponding to the downlink data frame is added to the corresponding downlink data frame. After receiving the corresponding downlink data frame, the station parses out the channel resource indicated by the channel resource information included in the corresponding downlink data frame. In this manner, the access point can allocate a channel resource to each station of the multiple stations, and the multiple stations can concurrently send acknowledgment messages to the access point by using the channel resources allocated by the access point to the multiple stations, so as to notify the access point of whether downlink data frames are received successfully, where the acknowledgment messages may be BlcokAck. Specifically, the information used to identify a channel resource allocated to a station corresponding to a downlink data frame is a sub-channel index (Sub-Channel-Index) field.

FIG. 7a is a schematic diagram of a physical-layer frame format of a downlink data frame according to an embodiment of the present invention, and FIG. 7b is still another schematic diagram of a physical-layer frame format of a downlink data frame according to an embodiment of the present invention. For a specific implementation manner, refer to the description of a physical-layer frame format of a downlink data frame from a perspective of an access point in the foregoing embodiment of the method for acknowledging transmission of downlink data frames by multiple stations in a wireless local area network.

Persons of ordinary skill in the art may understand: the foregoing processors (904 and 1004) may use a universal central processing unit (Central Processing Unit, CPU), a microprocessor, an application-specific integrated circuit (Application Specific Integrated Circuit, ASIC), or a baseband processor. The buses (906 and 1006) may include a path configured to implement communication between a processor and a transceiver. The transceiver may be an antenna.

It may be understood that the access point and the station in the foregoing embodiments may also be one mobile phone, such as a smartphone. The smartphone not only has a function of the access point, but also has a function of the station. In this case, the smartphone may serve as the access point to communicate with another station, such as another mobile phone. The smartphone may also serve as the station to communicate with an access point, such as another mobile phone.

Finally, it should be noted that the foregoing embodiments are merely intended for exemplarily describing the technical solutions of the present invention other than limiting the present invention. Although the present invention and benefits of the present invention are described in detail with reference to the foregoing embodiments, persons of ordinary skill in the art should understand that they may still make modifications to the technical solutions described in the foregoing embodiments or make equivalent replacements to some technical features thereof, without departing from the scope of the claims of the present invention.

## Claims

1. A method for acknowledging transmission of downlink data frames by multiple stations in a wireless local area network, wherein the method comprises:
sending, by an access point, a corresponding downlink data frame to each station of the multiple stations; and
receiving, by the access point after the access point sends the corresponding downlink data frame to each station, acknowledgment messages concurrently sent by the multiple stations on channel resources allocated by the access point to the multiple stations.

2. The method according to claim 1, wherein before the receiving, by the access point after the access point sends the corresponding downlink data frame to each station, acknowledgment messages concurrently sent by the multiple stations, the method further comprises:
sending, by the access point after preset time, an acknowledgment request message to the multiple stations, wherein the acknowledgment request message comprises channel resource information, and the channel resource information is used to indicate the channel resources allocated by the access point to the multiple stations.

3. The method according to claim 2, wherein the receiving, by the access point, acknowledgment messages concurrently sent by the multiple stations on channel resources allocated by the access point to the multiple stations is specifically:
receiving, by the access point, the acknowledgment messages concurrently sent by the multiple stations on the channel resources indicated by the channel resource information comprised in the acknowledgment request message.

4. The method according to claim 2 or 3, wherein the acknowledgment request message is a block acknowledgment request message BlockAckReq.

5. The method according to claim 4, wherein
the BlockAckReq comprises sub-channel index information and frame check sequence FCS information, and the sub-channel index information is followed by the FCS information.

6. The method according to claim 1, wherein
the downlink data frame comprises information used to identify a channel resource allocated to a station corresponding to the downlink data frame.

7. The method according to claim 6, wherein the information is located in a physical frame convergence procedure header PLCP Header of the downlink data frame.

8. A method for acknowledging transmission of a downlink data frame by a station in a wireless local area network, wherein the method comprises:
receiving, by the station, a downlink data frame sent by an access point; and
sending, by the station after the station receives the downlink data frame sent by the access point, an acknowledgment message to the access point on a channel resource allocated by the access point to the station.

9. The method according to claim 8, wherein before the sending, by the station after the station receives the downlink data frame sent by the access point, an acknowledgment message to the access point on a channel resource allocated by the access point to the station, the method further comprises:
receiving, by the station after preset time, an acknowledgment request message sent by the access point, wherein the acknowledgment request message comprises channel resource information, and the channel resource information is used to indicate the channel resource allocated by the access point to the station.

10. The method according to claim 9, wherein the sending, by the station, an acknowledgment message to the access point on a channel resource allocated by the access point to the station is specifically:
sending, by the station, the acknowledgment message to the access point on the channel resource indicated by the channel resource information comprised in the acknowledgment request message.

11. The method according to claim 9 or 10, wherein the acknowledgment request message is a block acknowledgment request message BlockAckReq.

12. The method according to claim 11, wherein
the BlockAckReq comprises sub-channel index information and frame check sequence FCS information, and the sub-channel index information is followed by the FCS information.

13. The method according to claim 8, wherein
the downlink data frame comprises information used to identify the channel resource allocated by the access point to the station.

14. The method according to claim 13, wherein the information is located in a physical frame convergence procedure header PLCP Header of the downlink data frame.

15. An access point, comprising:
a transceiver, a processor, and a bus, wherein
the transceiver and the processor implement communication by using the bus;
the transceiver sends, under control of the processor, a corresponding downlink data frame to each station of multiple stations; and
the transceiver is configured to receive, after sending the downlink data frame to each station, acknowledgment messages concurrently sent by the multiple stations on channel resources allocated by the access point to the multiple stations.

16. The access point according to claim 15, wherein the transceiver is further configured to send an acknowledgment request message to the multiple stations, wherein the acknowledgment request message comprises channel resource information, and the channel resource information is used to indicate the channel resources allocated by the access point to the multiple stations.

17. The access point according to claim 16, wherein the acknowledgment request message is a block acknowledgment request message BlockAckReq.

18. The access point according to claim 17, wherein the BlockAckReq comprises sub-channel index information and frame check sequence FCS information, and the sub-channel index information is followed by the FCS information.

19. The access point according to claim 15, wherein the downlink data frame comprises information used to identify a channel resource allocated to a station corresponding to the downlink data frame.

20. The access point according to claim 19, wherein the information is located in a physical frame convergence procedure header PLCP Header of the downlink data frame.

21. The access point according to any one of claims 15 to 20, wherein the access point is one of a laptop computer, a router, a set top box, or a mobile phone.

22. A station, comprising:
a transceiver, a processor, and a bus, wherein
the transceiver and the processor implement communication by using the bus;
the transceiver receives a downlink data frame sent by an access point; and
the transceiver is configured to: after receiving the downlink data frame sent by the access point, send, under control of the processor, an acknowledgment message to the access point on a channel resource allocated by the access point to the station.

23. The station according to claim 22, wherein the transceiver is further configured to receive an acknowledgment request message sent by the access point, wherein the acknowledgment request message comprises channel resource information, and the channel resource information is used to indicate the channel resource allocated by the access point to the station.

24. The station according to claim 23, wherein the acknowledgment request message is a block acknowledgment request message BlockAckReq.

25. The station according to claim 24, wherein the BlockAckReq comprises sub-channel index information and frame check sequence FCS information, and the sub-channel index information is followed by the FCS information.

26. The station according to claim 22, wherein the downlink data frame comprises information used to identify the channel resource allocated by the access point to the station.

27. The station according to claim 26, wherein the information is located in a physical frame convergence procedure header PLCP Header of the downlink data frame.

28. The station according to any one of claims 22 to 27, wherein the access point is one of a laptop computer, a router, a set top box, or a mobile phone.
